Europäisches Patentamt

(19) European Patent Office

Office européen des brevets

(11) Publication number: **0 325 573**
**A2**

## EUROPEAN PATENT APPLICATION

(21) Application number: **89870010.9**

(22) Date of filing: **18.01.89**

(51) Int. Cl.⁴: **C 08 L 51/06**
C 08 L 43/04, C 08 L 21/00
//(C08L51/06,21:00)

(30) Priority: **19.01.88 US 144993**

(43) Date of publication of application:
**26.07.89 Bulletin 89/30**

(84) Designated Contracting States:
**BE DE ES FR GB IT NL SE**

(71) Applicant: **Monsanto Company**
**Patent Department 800 North Lindbergh Boulevard**
**St. Louis Missouri 63167-7020 (US)**

(72) Inventor: **Wang, Yun Liang**
**424 Barrenwood**
**Wadsworth Ohio 44281 (US)**

**Gustin, Christian Paul**
**10 Avenue de la Tendraie**
**B-1421 Ophain-Bois-Seigneur-Isaac (BE)**

(74) Representative: **McLean, Peter et al**
**Monsanto Europe S.A. Patent Department Avenue de**
**Tervuren 270-272 Letter Box No 1**
**B-1150 Brussels (BE)**

(54) Moisture cross-linkable elastoplastic compositions and flexible crosslinked articles therefrom.

(57) Shaped articles, such as coatings for wire and cable are prepared by crosslinking compositions which are mixtures of (A) a polyolefin containing hydrolyzable silane groups and (B) elastoplastic blends of particles of rubber compounds dispersed in a continuous phase of thermoplastic polymer compatible with (A), wherein the rubber compound is at least partially cured.

EP 0 325 573 A2

**Description**

# MOISTURE-CROSSLINKABLE ELASTOPLASTIC COMPOSITIONS AND FLEXIBLE CROSSLINKED ARTICLES THEREFROM

This invention relates to elastoplastic compositions which are crosslinkable, so that they can be formed into articles which are then crosslinked to a thermoset condition.

It is known to produce thermoplastic materials which can be cross-linked to improve their high temperature stability, by incorporating hydrolyzable silane groups into the molecular structure of a polymeric (e.g., polyethylene) substrate, either by copolymerizing a silane-containing monomer, or by grafting silane groups onto a polymer chain. These silane-containing polymers are then crosslinked by exposing formed articles made therefrom to water, preferably in the presence of a silane condensation catalyst. Such materials are often too hard and stiff to be used in certain applications, such as, for example in wire and cable insulation and covering applications, where a stiff covering can make the wire or cable extremely difficult to handle.

Addition of rubbery materials to such stiff, hard compositions has not been successful, since the rubbery materials tend to depress the temperature at which the composition fail by flowing or sagging. Softer, more elastomeric materials which are moisture-crosslinkable can be made by grafting silane groups onto an elastomer, such as EPR rubber, as is known in the art.

## SUMMARY OF THE INVENTION

It has now been discovered that it is possible to produce elastomeric compositions by incorporating rubbery materials into silane-containing polymers which compositions are relatively soft and flexible, yet retain good resistance to distortion under high temperature exposure.

The compositions of the invention comprise a blend of 99-1 parts by weight of (A) polyolefin resin containing hydrolyzable silane groups and, correspondingly, 1-99 parts by weight of (B) an elastoplastic material comprising a continuous phase of thermoplastic polymer compatible with (A) and a disperse phase comprising particles of a rubber compound in which the rubber is at least partially cured.

Component (A) is based upon a polyolefin resin, which can be a homopolymer from a $C_2$-$C_8$ alpha monoolefin, or a copolymer from two or more such monoolefins. Preferred polyolefin resins are polymers from ethylene which have pendant hydrolyzable silane groups, either from having been copolymerized from ethylene and an unsaturated silane monomer, or, more preferably, from engrafted silane compounds. An especially preferred embodiment of (A) is a high density polyethylene onto which has been grafted a minor portion of silane groups, so the polymer contains 0.1 to 15% engrafted silane groups by weight. Grafting can be accomplished by reacting an organosilane compound with the polyolefin resin in the presence of a free-radical generator, such as an organic peroxide. These grafting techniques are well known in the art. Similarly, the copolymerization of an alpha monoolefin with an unsaturated organosilane compound can be accomplished according to the methods known in the art. Polyolefin resins containing hydrolyzable silane groups are commercially available materials.

Portion (B) of the blend of the invention is an elastoplastic material comprising a continuous phase of thermoplastic polymer, which is compatible with portion (A) of the blend, and a disperse phase comprising particles of a rubber compound in which the rubber is at least partially cured.

"Elastoplastic" is a term which means both thermoplastic and elastomeric. By thermoplastic is meant capable of being melted at an elevated temperature, and thus processable by typical forming methods for plastics, namely injection-molding, extrusion and the like. By elastomeric is meant having the tension set property of forcibly retracting within a given period of time (such as 1 or 10 minutes) to less than 160% of original length after having been stretched at room temperature to 200% of original length and held for the same period of time.

Examples of elastoplastic materials suitable for portion (B) are found in U. S. Patents 4,104,210; 4,130,534; 4,130,535, 4,299,931; and 4,311,628; the disclosure of which patents are incorporated herein by reference.

The thermoplastic polymer which forms the continuous phase of portion (B) is compatible with portion (A) of the blend of the invention. That is, the two are technically compatible. Preferred examples of thermoplastic polymers are thermoplastic polyolefin resins which are crystalline, high-molecular weight, solid products from the polymerization of one or more monoolefins. Examples of such resins are isotactic and syndiotactic monoolefin polymer resins, representative members of which class are commercially available. Examples of satisfactory olefin monomers are ethylene, propylene, 1-butene, 1-pentene, 1-hexene, 2-methyl-1-propene, 3-methyl-1-pentene, 4-methyl-1-pentene, 5-methyl-1-hexene and mixtures thereof. Commercially available thermoplastic polyolefin resins, and preferably polyethylene or polypropylene, can be advantageously used.

The disperse phase of the blend comprises particles of a rubber compound in which the rubber is at least partially cured. A rubber compound is an intimate mixture of rubber with other ingredients normally admixed to rubber. These other ingredients can include vulcanizing (or curing) agents; oils, softeners or plasticizers; extenders and reinforcing agents, such as fillers, clays, talcs, carbon black, calcium carbonate, and the like; antidegradants stabilizers and other protecting agents. The rubber is intimately mixed with any or all of these ingredients in the rubber compound.

The particles of rubber compound are small, discrete and dispersed in the continuous phase. The particles should be preferably less than 50μM in diameter, and more preferably small enough that the weight average particle diameter is less than 10μM.

The rubber is at least partially cured, or vulcanized, in order to maximize the heat-distortion temperature of the blend of the invention. Any of the known methods and materials for vulcanizing the rubber can be used, as are set forth in the prior art, such as radiation, free-radical crosslinking, sulfur vulcanization systems, phenolic resin curing systems, diisocyanates, bis-maleimides or others, depending on the type of rubber and the desired properties of the vulcanizates.

Preferred vulcanizing methods employ so-called phenolic curing systems, which use a methylolphenolic resin and an activator. The resin can be a halogenated or a non-halogenated methylol phenolic resin, such as Schenectady's SP-1055 and SP-1045, respectively. With the halogenated resin the activator can be a metal oxide or salt, although metal oxides or salts can also be employed with the non-halogenated resin.

Most preferred blends of the invention have rubber portions which are fully cured, that is, the rubber is cured to the extent that less than about 5% of the curable rubber, preferably less than about 3% is extractable in a solvent which is capable of dissolving the uncured rubber.

The rubber in (B) can be any vulcanizable rubber capable of being dispersed in a continuous phase of a thermoplastic polymer compatible with portion (A) in the blends of the invention. Examples of such rubber include homoplymers and copolymers of diene monomers, such as polyisoprene (natural or synthetic), polybutadiene and copolymers of isoprene or butadiene with minor amounts of styrene, acrylonitrile, or alkyl(meth)acrylate monomers. Also included are olefinic rubbers, such as EPR or EPDM, the former being a rubbery copolymer from ethylene and propylene, and the latter a rubbery copolymer from ethylene, propylene and a minor amount of a diene monomer, such as 1,4-hexadiene, dicyclopentadiene, or ethylidene norbornene. Another example of such rubber is acrylate rubber, which are vulcanizable rubbery copolymers from alkyl(meth) acrylate monomers, optionally with ethylene. The acrylate rubbers can be crosslinked in a variety of ways; for example, if they contain an acid functionality, they can be crosslinked with metal oxides to form ionic crosslinks. More preferably, acid- or hydroxy-functional rubbers can be covalently crosslined with crosslinking agents such as polyamines or polyisocyanates.

Portion (B) of the compositions of the invention is preferably prepared by dynamic vulcanization of the rubber in a blend with a plastic, which involves forming a homogeneous blend of the rubber and the plastic by masticating a mixture of the two at a temperature at or above the melting point of the plastic, and then vulcanizing the rubber while continuing masticating until the desired degree of vulcanization is achieved. In this way, a dispersion of small vulcanized rubber particles in a continuous phase of plastic is obtained. Alternatively, portion (B) can be prepared by grinding the cured rubber compound to sufficient fineness and dispersing the particles in a plastic matrix.

The compositions are then prepared by simply blending portions (A) and (B), in the molten state, in the desired ratio. Articles can then be shaped from the compositions, and finished by moisture-crosslinking the silane groups, preferably in the presence of a catalyst such as dibutyltin dilaurate.

While, as stated above, the ratio of (A) to (B) in the compositions of the invention can be from 1:99 to 99:1, it is observed that when the amounts of (B) are quite low in the compositions only a slight degree of softening and increase in flexibility is realized as compared to the silane-crosslinked polyolefin resins themselves. Conversely, as more and more of (B) is blended with (A), the heat stability of the compositions is effected so that the crosslinked compositions are insufficiently heat-resistant. Thus, it is preferred that at least about 40 parts by weight of the blend is component (B), combined with about 60 parts by weight of (A); and it is also preferred that no more than about 90 parts by weight of the blend is component (B), combined with about 10 parts by weight of (A).

## PREFERRED EMBODIMENTS

A more complete understanding of the invention can be obtained by reference to the following examples, in which all parts are by weight, unless otherwise indicated.

## EXAMPLE I

Blends were prepared from SANTOPRENE® 201-64 thermoplastic rubber manufactured by Monsanto Company, (as part B)) and HDPEX auto-crosslinkable high density polyethylene manufactured by ASEA Kabel AB (as part (A)). The part (B) portion contains fully vulcanized, particulate EPDM rubber compound dispersed in polypropylene. The weight percentage of the rubber compound is about 88%, and the polypropylene continuous phase is about 12%. A hydrolysis accelerator is also added.

The blends were prepared in a standard laboratory Brabender mixer, at 180°C and 100 rpm. The SANTOPRENE® rubber and HDPEX were charged and fluxed together until uniform consistency was reached; the accelerator was added and mixing was continued for one additional minute. Specimens were compression molded, then submerged in nearly boiling water for 44 hours to complete the crosslinking.

Specimens were then dried, cooled and tested for hardness (Shore A or D), tension-set and stress-strain properties following standard ASTM test methods.

Testing for heat distortion was done by placing tension set specimens under load in a hot air oven at 200°C. Specimens were suspended with a load of 0.2N/mm$^2$ for 15 minutes (or until failure) and elongation measured. The percentage increase in original length is recorded. An arbitrary limit of 175% elongation is considered a top limit for wire and cable coatings. The samples which failed the test elongated greatly, and/or broke. The values given in percentage (%) and those in which the sample passed the test; the result is the percent deformation after 15 minutes in the 200°C oven under load. When values are in minutes (') or seconds ("), the sample elongated and broke in the indicated time.

Proportions of materials and test results are set forth in Table I. In the heat distortion test, five test samples were run at the same time on each composition; all five results are shown. U.T.S. and U.E. stand for ultimate tensile strength and ultimate elongation, respectively. T.S. stands for tension set. These tests were performed according to ASTM D-412.

The results in Table I indicate that compositions 3, at a 90:10 ratio for components (B):(A), still retains good resistance to heat distortion, while its hardness, 79A is substantially lower than that of composition 1, a control containing all component (A). Composition 2, another control containing all component (B) failed the heat distortion test, with all samples breaking in only about twenty seconds at 200°C. Thus, blends having elastomeric qualities are produced, which blends still pass the heat distortion test.

## EXAMPLE II

Blends of (A) and (B) were produced in a similar manner as in Example I, except that a different lot of HDPEX was used. Generally higher proprotions of (B):(A) were used. Proportions and test results are set forth in Table II.

TABLE I

| COMPOSITION | 1 | 2 | 3 | 4 | 5 | 6 | 7 | 8 |
|---|---|---|---|---|---|---|---|---|
| (A) HDPEX | 100 | – | 100----------------------------------------> | | | | | |
| Accelerator | 5 | – | 5----------------------------------------> | | | | | |
| (B) SANTOPRENE® 201-64 | | | | | | | | |
| rubber | – | 100 | 900 | 400 | 233 | 150 | 67 | 25 |
| Ratio, (B):(A), | | | | | | | | |
| based on 100 | 0:100 | 100:0 | 90:10 | 80:20 | 70:30 | 60:40 | 40:60 | 20:80 |
| | | | | | | | | |
| Heat Distortion, 200°C | 15% | 18" | 35% | 30% | 30% | 36% | 40% | 28% |
| | 15% | 18" | 30% | 30% | 29% | 36% | 40% | 28% |
| | 15% | 20" | 32% | 30% | 30% | 35% | 40% | 28% |
| | 18% | 21" | 33% | 30% | 29% | 34% | 40% | 28% |
| | 20% | 22" | 30% | 30% | 25% | 36% | 40% | 28% |
| | | | | | | | | |
| Shore Hardness | 55D | 64A | 79A | 87A | – | 37D | 48D | 55D |
| 100% Modulus, MPa | – | 2.9 | 4.7 | 6.3 | 8.7 | 9.5 | 14.0 | 19.3 |
| U.T.S., MPa | – | 6.3 | 7.0 | 8.9 | 11.0 | 11.5 | 13.8 | 17.0 |
| U.E., % | – | 400 | 330 | 400 | 420 | 430 | 410 | 270 |
| T.S., % | – | 5 | 17.5 | 25 | 32.5 | 41 | 55 | * |

– Test not run

* Sample broke during test

EP 0 325 573 A2

TABLE II

| COMPOSITION | 9 | 10 | 11 | 12 | 13 | 14 |
|---|---|---|---|---|---|---|
| (A) HDPEX | 100--------------------------------------------------------------------------> | | | | | |
|     Accelerator | 5------------------------------------------------------------------------------> | | | | | |
| (B) SANTOPRENE® 201-64 | | | | | | |
|     rubber | – | 1733 | 1000 | 633 | 450 | 340 |
| Ratio, (B):(A) | | | | | | |
|     based on 100 | 0 | 94:6 | 91:9 | 86:14 | 82:18 | 77:23 |
| | | | | | | |
| Heat Distortion, 200°C | 30% | 28" | 40% | 35% | 35% | 25% |
| | 30% | 1'18" | 40% | 35% | 35% | 30% |
| | 30% | 2'50" | 45% | 40% | 35% | 30% |
| | 35% | 40% | 45% | 40% | 35% | – |
| | 40% | 45% | 45% | 40% | 35% | – |
| | | | | | | |
| Shore Hardness | 61D | 73A | 79A | 83A | 86A | 90A |
| 100% Modulus, MPa | 28.3 | 3.6 | 4.4 | 5.2 | 6.1 | 7.1 |
| U.T.S., MPa | 19.2 | 6.8 | 7.6 | 8.0 | 8.4 | 9.6 |
| U.E., % | 1840 | 390 | 385 | 380 | 360 | 390 |
| T.S., % | * | 11 | 15 | 20 | 25 | 27.5 |

– Test not run

* Sample broke during test

EP 0 325 573 A2

The results in Table II show that two out of five specimens containing a ratio of (B):(A) as high as 94.6 pass the heat distortion test (Composition 10), showing a heat distortion resistance superior to that of the SANTOPRENE® 201-64 rubber alone. Composition 11, with a 91:9 ratio of (B):(A), passed the heat distortion test in five of five specimens.

## EXAMPLE III

In order to investigate the effect of the extent of cure of the rubber on the properties of compositions, a blend of dynamically cured EPDM rubber in polypropylene was prepared, in which the weight percent of the rubber compound was 83% and the weight percent of the polypropylene continuous phase was 17%. In order to produce a partially cured rubber, the level of phenolic resin in the rubber was cut to 25% of the normal amount. To estimate the degree of cure, the resultant blend was then tested for oil-absorption, by immersing a sample for 70 hours in ASTM #2 oil at 70°C. The sample had a weight gain of 34.1% (as compared to 26.0% for a fully cured counterpart, and 76.2% for an uncured counterpart).

Compositions were prepared by mixing HDPEX and accelerator with the uncured, partially cured and fully cured blends prepared above, in the same manner as before. Proportions and test results are shown in Table III.

The results in Table III show that, while a partially cured blend (B) is effective in the compositions, it is not as effective as a fully cured blend (B). Uncured blend (B) is a poor performer at the level used.

Comparing compositions containing uncured (15), partially cured (16) and fully cured (20)

TABLE III

| COMPOSITIONS | | 15 | 16 | 17 | 18 | 19 | 20 |
|---|---|---|---|---|---|---|---|
| (A) | HDPEX | 100------------------------------------------------------------------> | | | | | |
| | Accelerator | 5------------------------------------------------------------------> | | | | | |
| (B) | Uncured EPDM/PP blend | 400 | - | - | - | - | - |
| | Partially cured blend | - | 400 | 233 | 150 | 67 | - |
| | Fully cured blend | - | - | - | - | - | 400 |
| Ratio, (B):(A) based on 100 | | 80:20 | 80:20 | 70:30 | 60:40 | 40:60 | 80:20 |

Heat Distortion, 200°C

| | 10" | 35% | 25% | 24% | 33% | 40% |
|---|---|---|---|---|---|---|
| | 10" | 30" | 28% | 25% | 33% | 40% |
| | 10" | 37" | 25% | 26% | 30% | 40% |
| | 10" | 2'30" | 25% | 25% | 35% | 40% |
| | 10" | 1'30" | 24% | 25% | 30% | 40% |

| | 15 | 16 | 17 | 18 | 19 | 20 |
|---|---|---|---|---|---|---|
| Shore Hardness | 80A | 84A | 35D | 48D | 48D | 89A |
| 100% Modulus, MPa | 4.2 | 7.3 | 9.7 | 11.6 | 15.7 | 6.7 |
| U.T.S., MPa | 5.1 | 9.1 | 10.5 | 12.4 | 14.9 | 10.0 |
| U.E.,% | 413 | 282 | 215 | 365 | 290 | 315 |
| T.S.,% | 30 | 22.5 | 34 | 40 | 50 | 20 |

blends at the sme ratio of (B):(A) shows the effect of the level of cure. The composition with the partially cured

8

blend (16) shows borderline behaviour in the heat distortion test, but composition 17, at a 70:30 ratio of (B):(A), performs quite well.

In further experiments, compositions were prepared containing the uncured blend (B) at different ratios of (B):(A). It was found that even at ratios of 40:60 and 20:80 the compositions showed poor heat distortion, while the hardness values of these compositions (45D and 50D) were not much lower than the controls containing no blend (B). The conclusion reached is that the rubber in blend (B) must be at least partially cured.

## EXAMPLE IV

For purposes of comparison, several other thermoplastic elatomers were investigated as possible replacements for blend (B). Certain hydrogenated block copolymers of styrene and butadiene, sold by Shell under the designations Kraton G-7720 and G-7820 were tested, as were TPR-5490, TPR-1600, TPR-1700 and TPR-1900, sold by B.P. The latter materials are believed to be blends of polypropylene and EPDM rubber, in which the rubber may be partially cured. The TPRs are thought to contain 71%, 38%, 51% and 84% polypropylene respectively.

The various thermoplastic elastomers were blended with HDPEX and tested as before. Proportions and test results are set forth in Table IV.

The results in Table IV show that satisfactory results (from the heat distortion standpoint) can be achieved using some of the TPR and KRATON materials in place of (B). However, none of the compositions which showed adequate heat distortion values were flexible or had a hardness

TABLE IV

| COMPOSITION | 21 | 22 | 23 | 24 | 25 | 26 | 27 | 28 | 29 | 30 | 31 | 32 |
|---|---|---|---|---|---|---|---|---|---|---|---|---|
| (A) HDPEX | 100----|----|----|----|----|----|----|----|----|----|----|----> |
| Accelerator | 5----|----|----|----|----|----|----|----|----|----|----|----> |
| (B) TPR 5490 | 25 | - | - | - | - | - | - | - | - | - | - | - |
| TPR 1600 | - | 233 | 150 | - | - | - | - | - | - | - | - | - |
| TPR 1700 | - | - | - | 233 | 150 | - | - | - | - | - | - | - |
| TPR 1900 | - | - | - | - | - | 233 | 150 | 67 | - | - | - | - |
| KRATON G-7720 | - | - | - | - | - | - | - | - | 233 | 150 | - | - |
| KRATON G-7820 | - | - | - | - | - | - | - | - | - | - | 233 | 150 |
| Ratio, (B):(A) based on 100 | 20:80 | 70:30 | 60:40 | 70:30 | 60:40 | 70:30 | 60:40 | 40:60 | 70:30 | 60:40 | 70:30 | 60:40 |
| Heat Distortion, 200°C | 5' | 55" | 16" | 3' | 46% | 34" | 2'3" | 25% | 2'5" | 14'59" | 3' | 33% |
|  | 6'18" | 5'10" | 43% | 7'50" | 50% | 36" | 2'27" | 25% | 4'49" | 45% | 3'20" | 33% |
|  | 7'23" | 12'10" | 43% | 55% | 50% | 36" | 7'19" | 25% | 11'19" | 50% | 60% | 33% |
|  | 77% | 55% | 46% | 55% | 50% | 37" | 1'13" | 25% | 13' | 55% | 63% | 33% |
|  | 88% | 55% | 47% | 60% | 55% | 57% | 75% | 30% | 93% | 56% | 70% | 33% |
| Shore Hardness | 53D | 30D | 35D | 34D | 39D | 42D | 46D | 55D | 40D | 46D | 51D | 53D |
| 100% Modulus, MPa | * | 5.3 | 6.9 | 6.5 | 7.9 | * | * | * | 6.4 | 8.5 | 9.3 | 11.0 |
| U.T.S., MPa | 10.9 | 5.1 | 7.3 | 6.8 | 8.2 | 7.6 | 8.3 | 11.1 | 11.3 | 12.4 | 12.2 | 12.4 |
| U.E.,% | 100 | 245 | 390 | 290 | 370 | 65 | 50 | * | - | - | - | - |
| T.S.,% | * | 36 | 45 | 40 | 47.5 | * | * | * | 42.5 | 50 | 42.5 | * |

comparable with the composition of the invention.

10

## EXAMPLE V

In order to examine the effect of adding polypropylene or uncured EPDM alone to the HDPEX, a series of compositions was made substituting these materials for blend (B). Proportions and test results are shown in Table V.

TABLE V

| COMPOSITION | 33 | 34 | 35 | 36 |
|---|---|---|---|---|
| (A) HDPEX | 100----------------------------> | | | |
| Accelerator | 5----------------------------> | | | |
| (B) EPDM rubber | 43 | 67 | - | - |
| Polypropylene | - | - | 67 | 100 |
| Ratio of (B):(A), based on 100 | 30:70 | 40:60 | 40:60 | 50:50 |
| Heat Distortion, 200°C | 8'13" | 3'45" | 40% | 1' |
| | 14'10" | 9' | 46% | 1' |
| | 20% | 11' | 53% | 1'10" |
| | 25% | 14' | 57% | 1'20" |
| | 30% | 15% | 60% | 2'30" |
| Shore Hardness | 47D | 41D | 64D | 65D |
| 100% Modulus, MPa | 11.5 | 8.6 | 31.0 | 31.6 |
| U.T.S., MPa | 11.4 | 8.8 | 23.2 | 31.4 |
| U.E., % | 2750 | 1740 | 420 | 200 |

The results in Table V indicate that neither EPDM rubber nor polypropylene by itself is a satisfactory additive to soften or dilute the crosslinked polyethylene composition without impairing its heat distortion properties.

## EXAMPLE VI

To investigate the effect of using a blend (B) with a higher ratio of polyolefin continuous phase to rubber particles, a series of compositions was prepared using SANTOPRENE® 201-80 rubber, with a weight percentage of continuous phase of about 23% and of rubber compound of about 77%; and SANTOPRENE® 203-40 rubber, with 44% continuous phase and 56% rubber compound. Compositions were prepared and tested as before. Proportions and test results are shown in Table VI.

## TABLE VI

| COMPOSITIONS | 37 | 38 | 39 | 40 | 41 |
|---|---|---|---|---|---|
| (A) HDPEX | 100 ----------------------------------> | | | | |
| Accelerator | 5 -------------------------------------> | | | | |
| (B) 201-80 | 900 | 400 | - | - | - |
| 203-40 | - | - | 400 | 233 | 150 |
| Ratio,(B):(A), based on 100 | 90:10 | 80:20 | 80:20 | 70:30 | 60:40 |
| Heat Distortion | | | | | |
| 200°C | 33" | 40% | 25" | 2'30" | 70% |
| | 38" | 45% | 27" | 3'10" | 70" |
| | 45" | 48% | 27" | 4'40" | 70% |
| | 55" | 50% | 30" | 70% | 71% |
| | 2'25" | 51% | 33" | 76% | 72% |
| Shore Hardness | 31D | 36D | 48D | 51D | 52D |
| 100% Modulus, MPa | 6.3 | 7.8 | 10.4 | 11.7 | 12.5 |
| U.T.S., MPa | 11.1 | 11.0 | 16.9 | 15.2 | 17.4 |
| U.E., % | 490 | 480 | 540 | 460 | 535 |
| T.S., % | 20 | 30 | 40 | 47 | - |

The results in Table VI indicate that the blends containing higher amounts of continuous phase polypropylene, while effective, are not as efficient as those blends with lower amounts of polypropylene. Since the blends themselves are harder, their softening effect on the composition is less. Also, lower amounts can be used while still passing the heat distortion test.

Experiments using a blend of cured nitrile rubber particles in a continuous phase of polypropylene as blend (B) were also successful in producing a composition which passed the heat distortion test using (B):(A) ratio of 80:20. This composition had a Shore A hardness of 89.

Although the invention has been illustrated by typical examples, it is not limited thereto. Changes and modifications of the examples of the invention herein chosen for purposes of disclosure can be made which do not constitute departures from the spirit and scope of the invention.

**Claims**

1. A composition comprising a blend of 99-1 parts by weight of (A) polyolefin resin containing hydrolyzable silane groups and, correspondingly, 1-99 parts by weight of (B) an elastoplastic material comprising a continuous phase of thermoplastic polymer compatible with (A) and a disperse phase comprising particles of a rubber compound in which the rubber is at least partially cured.

2. The composition of Claim 1 in which the polyolefin resin of (A) is selected from polyethylene, polypropylene, and copolymers from ethylene and a $C_{3-8}$ alpha monoolefin.

3. The composition of Claim 1 in which the rubber is selected from one or more homopolymers of butadiene or isoprene; copolymers of butadiene or isoprene with minor amounts of styrene or acrylonitrile; ethylene-propylene-diene monomer rubber; and copolymers from alkyl(meth) acrylates optionally with ethylene.

4. The composition of Claim 1 in which (A) is polyethylene containing 0.1 - 15% engrafted silane groups by weight, the continuous phase of (B) is crystalline polypropylene and the disperse phase of (B) is a compound of EPDM rubber, diene homopolymer rubber, diene copolymer rubber on a rubbery copolymer from alkyl(meth)acrylate monomer.

5. The composition of Claim 4 in which the particles of the rubber compound in (B) are 50µM or less in diameter.

6. The composition of Claim 5 in which the weight average diameter of the particles is less than 10µM.

7. The composition of Claim 4 in which the disperse phase of (B) is a compound of EPDM rubber containing from 50 to 200 parts of hydrocarbon plasticizer, based on the weight of the EPDM rubber, and the weight ratio of the disperse phase to the continuous phase in (B) is from about 10:1 to about 1:1.

8. The composition of Claim 7 in which the EPDM rubber is cross-linked with a phenolic curing system.

9. The composition of Claim 4 in which the ratio of (A) to (B) is from 10:90 to 60:40.

10. The composition of Claim 9 in which the disperse phase of (B) is a compound of EPDM rubber containing from 50 to 200 parts of hydrocarbon plasticizer, based on the weight of the EPDM rubber, and the weight ratio of the disperse phase to the continuous phase in (B) is from about 10:1 to about 1:1.

11. The composition of Claim 10 in which the EPDM rubber is crosslinked with a phenolic curing system.

12. The composition of Claim 11 in which the phenolic curing system comprises a methylol phenolic resin and a cure activator.

13. The composition of Claim 12 in which the methylol phenolic resin is non-halogenated and the cure activator is selected from Lewis acids and metal salts and oxides.

14. The composition of Claim 9 in which the rubber is fully cured.

15. An article shaped from the composition of Claim 1 which is exposed to water, so as to hydrolyze the silane groups.

16. The article of Claim 15 in which a hydrolysis catalyst is present during hydrolysis.

17. The article of Claim 16 in which the catalyst is dibutyl tin dilaurate.